# EUROPEAN PATENT APPLICATION

(11) **EP 3 735 015 A1**
(43) Date of publication of application: **04.11.2020**
(21) Application number: 17936464.1
(22) Date of filing: 27.12.2017
(51) Int. Cl.: H04W 16/28, H04W 72/04

(54) **USER TERMINAL AND RADIO COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); NA, Chongning, Beijing 100190 (CN); HOU, Xiaolin, Beijing 100190 (CN)
(74) Representative: Hoffmann Eitle
(86) International application number: PCT/JP2017/047097
(87) International publication number: WO 2019/130518

(57) **Abstract**

To appropriately configure frequency resources used for a beam failure recovery procedure, a user terminal includes: a transmitting section that transmits a beam failure recovery request when detecting a beam failure; a receiving section that receives a response to the beam failure recovery request; and a control section that controls determination of at least one of a frequency resource used to transmit the beam failure recovery request, and a frequency resource used to receive the response.

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) have been also studied.

Legacy LTE systems (LTE Rel. 8 to 13) perform monitoring of radio link quality (Radio Link Monitoring (RLM)). When a Radio Link Failure (RLF) is detected by the RLM, re-establishment of Radio Resource Control (RRC) connection is requested to the user terminal (UE: User Equipment).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It has been studied for a future radio communication system (e.g., LTE Rel. 14 or subsequent releases, NR or 5G) to perform communication by using Beam Forming (BF). Furthermore, it has been studied to perform a procedure of switching to other beams (this may be referred to as Beam Failure Recovery (BFR)) when specific beam quality deteriorates (beam failure) to prevent an occurrence of a Radio Link Failure (RLF).

However, a configuration of a frequency resource used for the BFR procedure such as a frequency resource of a beam failure, a frequency resource used for a beam failure recovery request and a frequency resource used to respond to the beam failure recovery request has not yet been studied.

It is therefore one of objects of the present disclosure to provide a user terminal and a radio communication method that appropriately configure frequency resources used for a beam failure recovery procedure.

### Solution to Problem

A user terminal according to one aspect of the present disclosure includes: a transmitting section that transmits a beam failure recovery request when detecting a beam failure; a receiving section that receives a response to the beam failure recovery request; and a control section that controls determination of at least one of a frequency resource used to transmit the beam failure recovery request, and a frequency resource used to receive the response.

### Advantageous Effects of Invention

According to one aspect of the present disclosure, it is possible to appropriately configure frequency resources used for a beam failure recovery procedure.

### Brief Description of Drawings

Fig. 1 is a schematic diagram of decision on an RLF based on IS/OSS.
Fig. 2 is a diagram illustrating one example of a BFR procedure.
Fig. 3 is a diagram illustrating one example of time/frequency resources of the BFR procedure according to a first aspect.
Fig. 4 is a diagram illustrating one example of a BWP and CORESET-BFR.
Fig. 5 is a diagram illustrating one example of a schematic configuration of a radio communication system according to the present embodiment.
Fig. 6 is a diagram illustrating one example of an overall configuration of a radio base station according to the present embodiment.
Fig. 7 is a diagram illustrating one example of a function configuration of the radio base station according to the present embodiment.
Fig. 8 is a diagram illustrating one example of an overall configuration of a user terminal according to the present embodiment.
Fig. 9 is a diagram illustrating one example of a function configuration of the user terminal according to the present embodiment.
Fig. 10 is a diagram illustrating one example of hardware configurations of the radio base station and the user terminal according to the present embodiment.

### Description of Embodiments

It has been studied for a future radio communication system (e.g., LTE Rel. 14 or subsequent releases, NR or 5G) to perform communication by using Beam Forming (BF).

For example, a user terminal and/or a radio base station (e.g., gNode B (gNB)) may use a beam (also referred to as a transmission beam or a Tx beam) used for transmission of signals, and a beam (also referred to as a reception beam or an Rx beam) used for reception of signals. A combination of the transmission beam on a transmission side and the reception beam on a reception side may be referred to as a Beam Pair Link (BPL).

Environment in which BF is used is likely to be influenced by blockage due to an obstacle, and therefore radio link quality is assumed to deteriorate. There is a risk that the deterioration of the radio link quality frequently causes a Radio Link Failure (RLF). When the RLF occurs, reconnection with a cell needs to be established, and therefore the frequent occurrence of the RLF deteriorates a system throughput.

Hence, a Radio Link Monitoring (RLM) method has been argued for the future radio communication system. For example, it has been studied for the future radio communication system to support one or more downlink signals (also referred to as, for example, DL-Reference Signals (RSs)) for RLM.

Resources of the DL-RSs (DL-RS resources) may be associated with resources and/or ports for a Synchronization Signal Block (SSB) or a channel state measurement RS (CSI-RS: Channel State Information RS). In addition, the SSB may be referred to as, for example, an SS/Physical Broadcast Channel (PBCH) block.

The DL-RS may be at least one of a Primary Synchronization Signal (PSS: Primary SS), a Secondary Synchronization Signal (SSS: Secondary SS), a Mobility Reference Signal (MRS: Mobility RS), a CSI-RS, a Tracking Reference Signal (TRS: Tracking RS), a DeModulation Reference Signal (DMRS) and a beam-specific signal, or a signal that is configured by expanding and/or changing these signals (e.g., a signal that is configured by changing a density and/or a periodicity).

The user terminal may be configured by a higher layer signaling to perform measurement that uses the DL-RS resources. The user terminal configured to perform measurement may be assumed to decide whether a radio link is in an In-Sync (IS) state or an Out-Of-Sync (OOS) state based on a measurement result of the DL-RS resources. Default DL-RS resources in which the user terminal performs RLM in a case where the DL-RS resources are not configured by the radio base station may be defined by a specification.

When radio link quality estimated (that may be referred to as measured) based on at least one of configured DL-RS resources exceeds a given threshold (e.g., Qin), the user terminal may decide that the radio link is IS.

When the radio link quality estimated based on at least one of the configured DL-RS resources is less than a given threshold (e.g., Qₒᵤₜ), the user terminal may decide that the radio link is OOS. In addition, this radio link quality may be, for example, radio link quality associated with a Block Error Rate (BLER) of a hypothetical PDCCH.

IS/OOS that is decided per fixed duration (periodically) may be referred to as Periodic IS (P-IS)/Periodic OOS (P-OOS). For example, IS/OOS that is decided by using an RLM-RS may be P-IS/OOS.

According to legacy LTE systems (LTE Rel. 8 to 13), IS and/or OOS (IS/OOS) is indicated from a physical layer to a higher layer (e.g., an MAC layer or an RRC layer) in the user terminal, and an RLF is decided based on the IS/OOS indication.

More specifically, when receiving the OOS indication related to a given cell (e.g., primary cell) a given number of times (e.g., N310 times), the user terminal activates (starts) a timer T310. When receiving the IS indication related to the given cell N311 times while the timer T310 is activating, the user terminal stops the timer T310. When the timer T310 expires, the user terminal decides that the RLF has been detected in relation to the given cell.

In addition, names such as N310, N311 and T310 are not limited to these. T310 may be referred to as a timer for RLF detection. N310 may be referred to as the number of times of an OOS indication for activating the timer T310. N311 may be referred to as the number of times of an IS indication for stopping the timer T310.

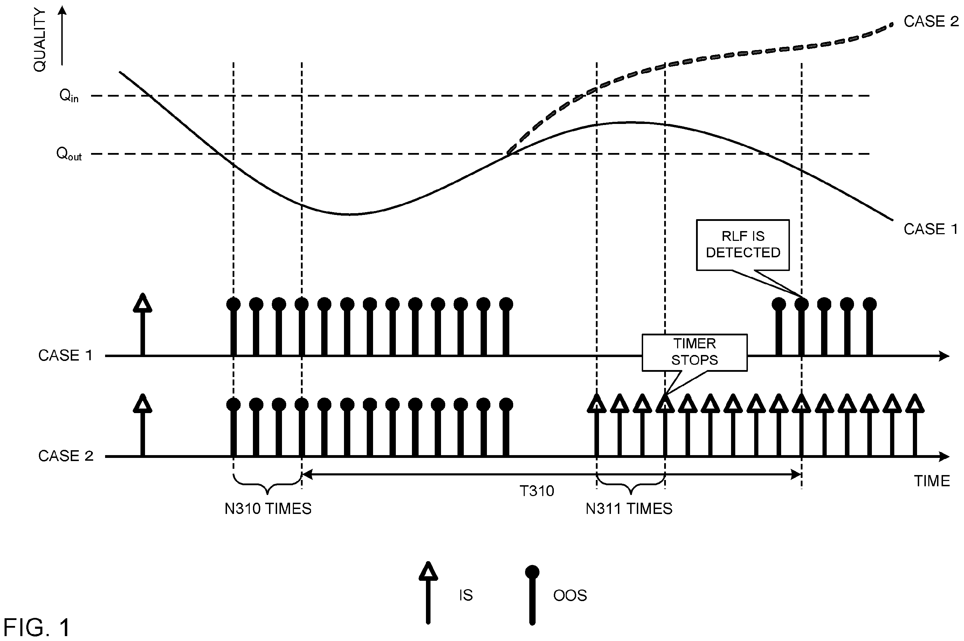

Fig. 1 is a schematic diagram of decision on an RLF based on IS/OOS. Fig. 1 assumes N310 = N311 = 4. T310 represents a duration from activation to expiration of the timer T310, and does not indicate a counter of the timer.

An upper part in Fig. 1 illustrates two cases (a case 1 and a case 2) of a change in estimated radio link quality. A lower part in Fig. 1 illustrates IS/OOS indications associated with the above two cases.

In the case 1, when OOS first occurs N310 times, the timer T310 activates. The radio link quality does not exceed the threshold Qᵢₙ even after the activation, and, when T310 expires, an RLF is detected.

In the case 2, although the timer T310 activates similar to the case 1, the radio link quality exceeds the threshold Qᵢₙ after the activation, and, when IS occurs N311 times, T310 stops.

It has been studied for the future radio communication system (e.g., LTE Rel. 14 or subsequent releases, NR or 5G) to perform a procedure of switching to other beams (that may be referred to as Beam Failure Recovery (BFR) or L1/L2 beam recovery) when specific beam quality deteriorates to prevent an occurrence of an RLF.

As described above, the RLF is decided by measuring an RS in a physical layer and controlling activation and expiration of the timer in a higher layer, and recovery from the RLF requires a procedure equivalent to random access. On the other hand, according to switching to other beams (BFR or L1/L2 beam recovery), a procedure in at least part of layers is expected to be simplified compared to the recovery from the RLF. In addition, the BFR procedure may be referred to as a BFR request procedure or link reconfiguration procedures.

The BFR procedure may be triggered on an occasion of a beam failure. In this regard, the beam failure (also referred to as a beam fault) may indicate that, for example, one, a plurality or all of control channels are not detected for a given duration by the UE and/or the base station, or may indicate that a measurement result of received quality of a reference signal associated with the control channel does not satisfy given quality.

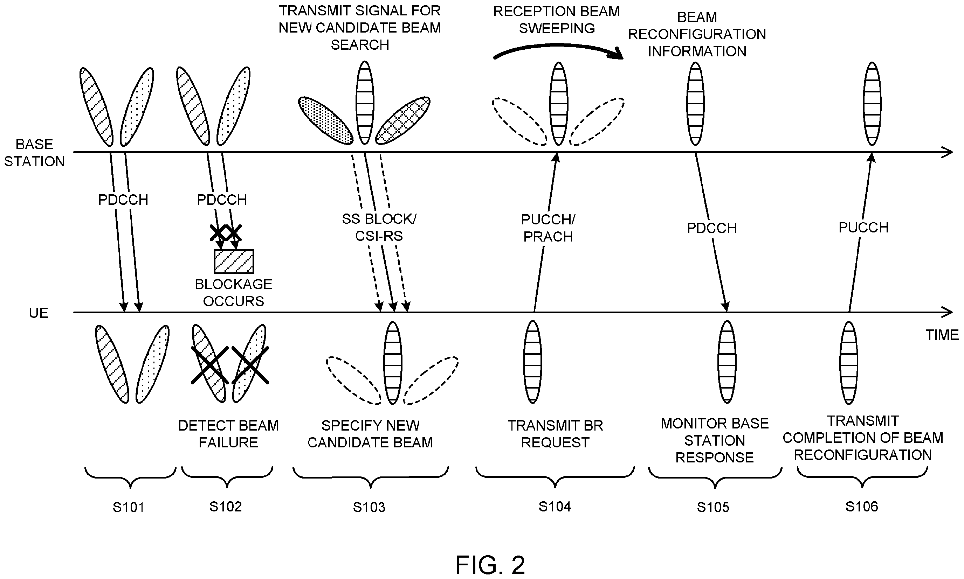

Fig. 2 is a diagram illustrating one example of the BFR procedure. The number of beams is one example, and is not limited to this. In an initial state (step S101) in Fig. 2, the user terminal receives a downlink control channel (PDCCH: Physical Downlink Control Channel) transmitted by the radio base station by using two beams.

In step S102, a radio wave from the radio base station is blocked, and therefore the user terminal cannot detect the PDCCH. This blockage occurs due to, for example, an influence of an obstacle between the user terminal and the base station, a fading or an interference.

The user terminal detects the beam failure when a given condition is satisfied. The given condition may be a case where, for example, all measurement results of 1 or a plurality of DL-RS resources configured in advance become lower than a given threshold Q_{out_LR}. The radio base station may decide that the user terminal has detected the beam failure, based on a fact that there is no indication from the user terminal, or may decide that the beam failure has been detected when receiving a given signal (a BFR request in step S104) from the user terminal.

In step S103, the user terminal starts searching new candidate beams used for new communication for BFR. More specifically, when detecting a beam failure, the user terminal performs measurement based on the DL-RS resources configured in advance, and specifies one or more preferred (e.g., good quality) new candidate beams. In a case of this example, one beam is specified as the new candidate beam.

In step S104, the user terminal that has specified the new candidate beam transmits the BFR request (a BFR request signal or a BFRQ: BFR request). The BFR request may be transmitted by using, for example, a random access channel (PRACH: Physical Random Access Channel).

A PRACH resource may be configured by a higher layer (e.g., RRC signaling). The PRACH resource may include a time resource, a frequency resource and a PRACH sequence.

The BFR request may include information of the new candidate beam specified in step S103. The PRACH resource for the BFR request may be associated with the new candidate beam. For example, 1 or a plurality of PRACH resources and/or sequences are configured to each of the new candidate beams, so that the user terminal can determine a PRACH resource and/or sequence to be transmitted as the BFR request according to a specified new candidate beam. The information of the beam may be indicated by using a Beam Index (BI), a port of a given reference signal, and/or a resource index (e.g., a CSI-RS Resource Indicator (CRI)).

In step S105, the radio base station that has detected the BFR request transmits a response signal (BFR request response (BFRQ response)) to the BFR request from the user terminal. The BFR request response may include reconfiguration information (e.g., DL-RS resource configuration information) of one or a plurality of beams. The BFR request response may be transmitted as, for example, a PDCCH in a user-specific search space or may be transmitted as a PDCCH in a user terminal-common search space. When detecting the response signal, the user terminal may recognize a BFR success. The user terminal may decide a transmission beam and/or a reception beam to use, based on the beam reconfiguration information.

In step S106, the user terminal may transmit to the radio base station a message indicating that a beam reconfiguration has been completed. The message may be transmitted on, for example, a PUCCH.

The BFR success refers to, for example, a case where the BFR procedure has reached step S106. On the other hand, a BFR failure refers to a case where the BFR procedure does not reach step S106 (e.g., a case where even one candidate beam has not been able to be specified in step S103).

This BFR procedure is assumed to use one frequency resource (e.g., primary cell).

The inventors of this application have conceived appropriately configuring a configuration of a frequency resource (e.g., a cell, a Component Carrier (CC), a Control Resource Set (CORESET) or a partial band (a bandwidth part or a BWP)) used for the BFR procedure. For example, the inventors of this application have conceived that the user terminal determines at least one of a frequency resource used to transmit a BFR request, and a frequency resource used to receive a BFR request response. Furthermore, for example, the inventors of this application have studied a relationship between a configuration of a BWP for the BFR request response, and a configuration of a CORESET for the BFR request response (CORESET-BFR).

In addition, a Primary Cell (PCell) may be a special cell. According to Dual Connectivity (DC), the special cell may be a PCell in a Master Cell Group (MCG) and a Primary Secondary Cell (PSCell) in a Secondary Cell Group (SCG). A Secondary Cell (SCell) may be a cell other than the special cell.

The BFR procedure that uses a plurality of cells may be referred to as cross-carrier BFR.

An embodiment according to the present disclosure will be described in detail below with reference to the drawings. Each aspect may be each applied alone, or may be applied in combination.

### (First Aspect)

The first aspect will describe at least one cell (or a Component Carrier (CC)) according to a BFR procedure.

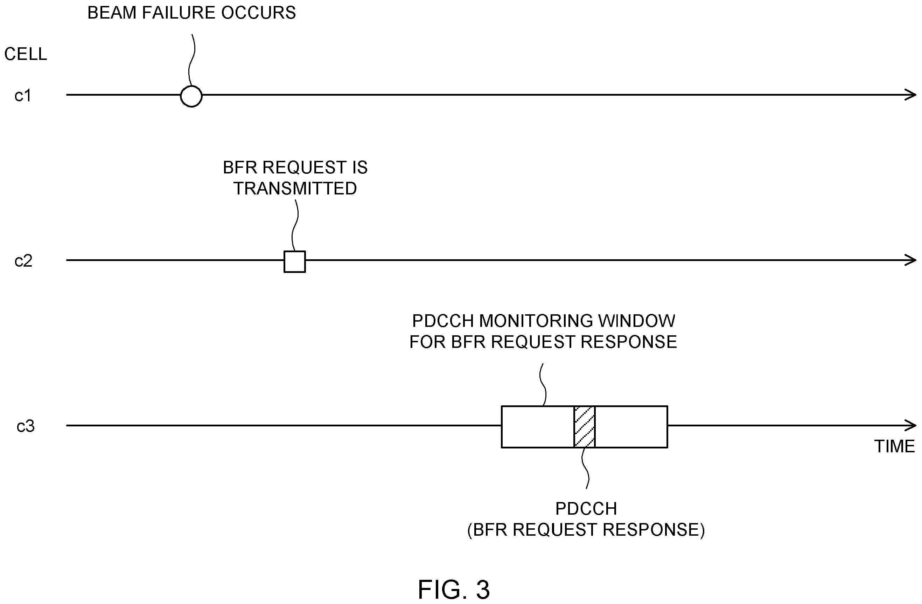

Fig. 3 is a diagram illustrating one example of time/frequency resources according to the BFR procedure according to the first aspect.

A UE starts the BFR procedure when detecting a beam failure in a serving cell c1.

Subsequently, the UE transmits a BFR request in a serving cell c2.

One of following options 1-1 and 1-2 may be applied to c2.

### <Option 1-1>

c2 is equal to c1. That is, the UE may transmit the BFR request in a cell in which the beam failure has been detected. According to this option 1-1, it is possible to appropriately transmit and receive the BFR request. Furthermore, a Network (an NW such as a radio base station) does not need to indicate c2 to the UE, so that it is possible to suppress an indication overhead.

### <Option 1-2>

c2 may be different from c1. In this regard, one of following options 1-2-1 and 1-2-2 may be applied.

### <<Option 1-2-1>>

An association between c1 in which a beam failure is likely to be detected and c2 for the BFR request may be configured to the UE by a higher layer (e.g., RRC signaling) (semi-statically). When the beam failure is detected in c1, c2 may be determined from c1 according to the association.

When receiving the BFR request, the NW may identify the serving cell c1 in which the beam failure has occurred, according to in which cell the BFR request has been received.

According to this option 1-2-1, even when c2 is different from c1, it is possible to match recognitions of the NW and the UE and appropriately process the BFR procedure.

### «Option 1-2-2»

The association between c1 in which the beam failure is likely to be detected and c2 for the BFR request may be implicitly indicated by a resource (BFR request resource) used for transmission of the BFR request. The BFR request resource may be at least one of a cell, a frequency, a time and a sequence (e.g., preamble). The BFR request resource may be a PRACH resource and/or a PRACH sequence.

For example, a BFR request resource set may be configured to the UE by a higher layer (e.g., RRC signaling). Each entry of the BFR request resource set may be associated with one serving cell in which the beam failure is likely to be detected. The UE may select a BFR request resource associated with a serving cell in which the beam failure has been declared (detected) from the BFR request resource set.

When receiving the BFR request, the NW may identify the serving cell c1 in which the beam failure has occurred, according to which BFR request resource has been used.

According to this option 1-2-2, even when c2 is different from c1, it is possible to match recognitions of c2 between the UE and the NW and appropriately process the BFR procedure.

Subsequently, the UE receives a BFR request response in a serving cell c3.

The UE may monitor a PDCCH indicating the BFR request response in a PDCCH monitoring window of a certain duration that starts a given time after transmission of the BFR request. For example, start of the PDCCH monitoring window may be 4 slots after a slot of transmission of the BFR request. For example, a time duration of the PDCCH monitoring window may be configured to the UE by a higher layer (e.g., RRC signaling). The UE may assume that CRC of the PDCCH indicating the BFR request response is masked by a given RNTI (e.g., a C-RNTI or an RA-RNTI). When the CRC of the PDCCH is masked by the C-RNTI, the PDCCH can be received and detected only by the UE, and therefore is effective in case where a contention-free random access procedure for configuring the BFR request resource to the UE in a dedicated manner is used. On the other hand, when the CRC of the PDCCH is masked by the C-RNTI, the PDCCH can be received and detected by the UE that has transmitted the corresponding BFR request, and is effective in a case where a contention-based random access procedure for configuring the BFR request resource between a plurality of UEs in a shared manner is used. In this regard, in the case of the latter, contention-resolution needs to be performed, and therefore the UE that has received the BFR request response may transmit a PUSCH (Msg. 3) including the C-RNTI of the UE in response to the BFR request response.

When receiving the PDCCH in the PDCCH monitoring window, the UE may recognize that the BFR request response has been received. Downlink Control Information (DCI) of the PDCCH may indicate the BFR request response, and the UE may recognize the BFR request response from the received DCI.

CORESET-BFR may be configured to the UE. The UE may monitor the PDCCH during CORESET-BFR in the PDCCH monitoring window.

One of following options 2-1 and 2-2 may be applied to c3.

### <Option 2-1>

c3 is equal to c2. That is, the UE may receive the BFR request response in a cell that has transmitted the BFR request. According to this option 2-1, the NW does not need to indicate c3 to the UE, so that it is possible to suppress an indication overhead.

### <Option 2-2>

c3 may be different from c2. In this regard, one of following options 2-2-1, 2-2-2 and 2-2-3 may be applied to c3.

### «Option 2-2-1»

c3 may be fixed to c1. That is, the UE may receive the BFR request response in a cell in which the beam failure has been detected. According to this option 2-2-1, the NW does not need to indicate c3 to the UE, so that it is possible to suppress an indication overhead.

### «Option 2-2-2»

Associations between c3 for the BFR request response, and c2 and/or c1 may be configured to the UE by a higher layer (e.g., RRC signaling) (semi-statically).

For example, a set of the associations between c3, and c2 and/or c1 may be configured to the UE by a higher layer (e.g., RRC signaling). When the association between c3 and c2 is configured, the UE may recognize c3 associated with c2 that has transmitted the BFR request, and receive BFR request response by using c3. When the association between c3 and c1 is configured, the UE may recognize c3 associated with c1 in which the beam failure has occurred, and receive the BFR request response by using c3.

According to this option 2-2-2, even when c3 is different from c2 and/or c1, the UE can determine c3, and appropriately receive the BFR request response.

### «Option 2-2-3»

Associations between c3 for the BFR request response, and c2 and/or c1 may be dynamically instructed by DCI including the BFR request response.

A specific field of the DCI may instruct which cell the BFR request response is associated with. The specific field indicating this cell may be configured to the UE. The specific field may be a Carrier Indicator Field (CIF) for cross-carrier scheduling.

When the specific field of the DCI indicates c2, the UE may recognize which BFR request transmitted in which cell the received BFR request response is associated with. When the specific field of the DCI indicates c1, the UE may recognize which beam failure detected in which cell the received BFR request response is associated with.

According to this option 2-2-3, even when c3 is different from c2 and/or c1, the UE can recognize a cell of the beam failure and/or the BFR request associated with the received BFR request response.

Each of c1, c2 and c3 may be a primary cell or may be a secondary cell.

### (Second Aspect)

The second aspect will describe a relationship between a configuration of a CORESET for BFR (CORESET-BFR) and a configuration of a BWP used for the CORESET-BFR.

One or more partial frequency bands (also referred to as, for example, partial bands or Bandwidth Parts (BWPs)) in a carrier (also referred to as a Component Carrier (CC) or a system bandwidth) are used for DL and/or UL communication (DL/UL communication). A BWP used for DL communication may be referred to as a DL BWP (DL frequency band), and a BWP used for UL communication may be referred to as a UL BWP (UL frequency band). The configured BWP may be activated or deactivated.

A specific BWP may be defined in advance for a UE. For example, a BWP (initial active BWP) to which a PDSCH for conveying system information (e.g., RMSI: Remaining Minimum System Information) is scheduled may be specified by a frequency position and a bandwidth of a CORESET on which DCI for scheduling the PDSCH is arranged. Furthermore, a numerology identical to the RMSI may be applied to the initial active BWP.

Furthermore, a BWP that is default (default BWP) may be defined for the UE. The default BWP may be the above-described initial active BWP or may be configured by a higher layer signaling (e.g., RRC signaling).

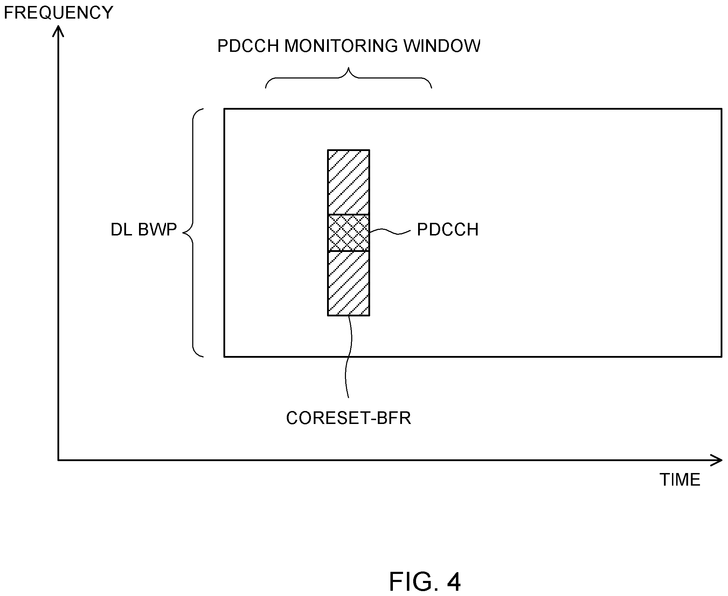

Fig. 4 is a diagram illustrating one example of a BWP and CORESET-BFR.

One of following options 1 to 4 may be applied to a relationship between a BWP configuration and a CORESET-BFR configuration in this BWP.

### <Option 1>

The CORESET-BFR may be associated with the default DL BWP. The DL BWP in Fig. 4 may be the default DL BWP.

When the UE monitors a PDCCH associated with the CORESET-BFR, the UE switches the DL BWP to the default DL BWP.

The BFR procedure is similar to connection recovery, and therefore it is preferable to use a bandwidth that all UEs can access or a bandwidth that can be monitored irrespectively of data communication. The UE monitors the PDCCH by using the default DL BWP, so that it is possible to appropriately perform the BFR procedure irrespectively of capability and/or a communication state of the UE. Furthermore, it is not necessary to indicate a BWP configuration every time the BFR procedure is performed, so that it is possible to suppress an indication overhead.

### <Option 2>

The CORESET-BFR may be associated with a specific DL BWP. The DL BWP in Fig. 4 may be the specific DL BWP.

An association between the CORESET-BFR and the specific DL BWP may be configured to the UE by a higher layer (e.g., RRC signaling).

When the UE monitors a PDCCH associated with the CORESET-BFR, the UE activates the DL BWP associated with the CORESET-BFR.

The association between the CORESET-BFR and the specific DL BWP is configured to the UE, so that it is possible to flexibly configure the DL BWP used to monitor a PDCCH.

### <Option 3>

The CORESET-BFR may be associated with a currently active DL BWP. The DL BWP in Fig. 4 may be the active DL BWP.

When the UE monitors a PDCCH associated with the CORESET-BFR, a NW guarantees that the DL BWP associated with the CORESET-BFR is active.

When receiving a BFR request, the NW activates the DL BWP associated with the CORESET-BFR. Hence, the UE does not need to newly activation/deactivation a DL BWP during monitoring of the PDCCH. Consequently, a UE operation becomes simple, so that it is possible to suppress a processing load of the UE. Furthermore, the NW does not need to indicate the BWP configuration to the UE every time the BFR procedure is performed, so that it is possible to suppress an indication overhead.

### <Option 4>

The CORESET-BFR may be associated with a DL BWP for transmission of a new candidate beam detection RS (DL-RS). The DL BWP in Fig. 4 may be a DL BWP for transmission of the DL-RS.

The UE measures a DL-RS resource configured in advance in a cell in which a beam failure has been detected, and specifies one or more preferred new candidate beams based on the measurement. The UE may assume that a PDCCH associated with the CORESET-BFR is transmitted in the same DL BWP as a DL BWP for a DL-RS associated with a newly identified beam. In this case, CORESET-BFR configuration information may not include BWP configuration information.

The UE monitors the PDCCH in the DL BWP in which the DL-RS has been measured, and therefore does not need to newly activation/deactivation a DL BWP during monitoring of the PDCCH. Consequently, a UE operation becomes simple, so that it is possible to suppress a processing load of the UE. Furthermore, the NW does not need to indicate the BWP configuration to the UE every time the BFR procedure is performed, so that it is possible to suppress an indication overhead. Furthermore, when the CORESET-BFR configuration information does not include the BWP configuration information, it is possible to suppress an indication overhead.

### (Radio Communication System)

The configuration of the radio communication system according to the present embodiment will be described below. This radio communication system uses at least one combination of a plurality of above aspects to perform communication.

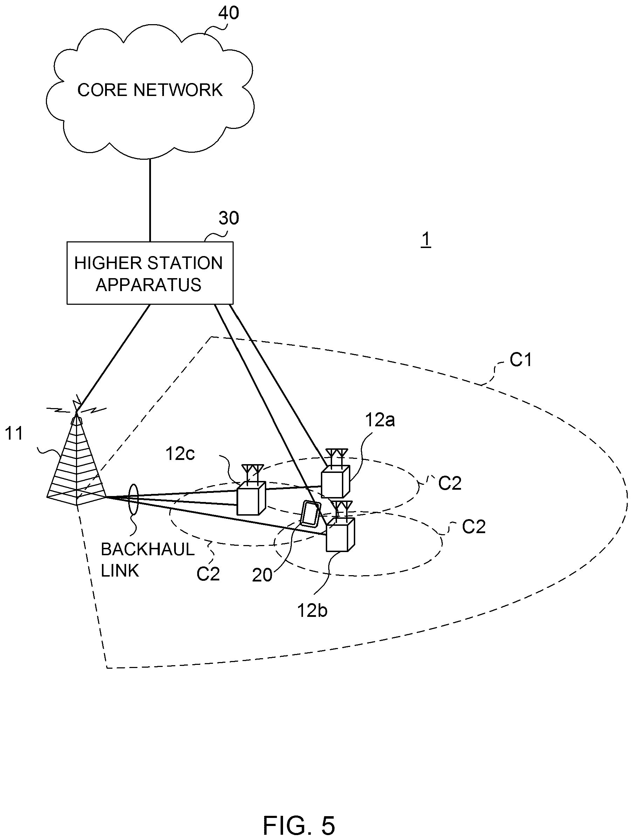

Fig. 5 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 5.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier-spacing, a bandwidth, a symbol length, a cyclic prefix length, a subframe length, a TTI length, the number of symbols per TTI, a radio frame configuration, filtering processing and windowing processing.

The radio base station 11 and each radio base station 12 (or the two radio base stations 12) may be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and System Information Blocks (SIBs) are conveyed on the PDSCH. Furthermore, Master Information Blocks (MIBs) are conveyed on the PBCH.

The downlink L1/L2 control channel includes at least one of downlink control channels (a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be indicated by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio link quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific Reference Signal). Furthermore, a reference signal to be conveyed is not limited to these.

### <Radio Base Station>

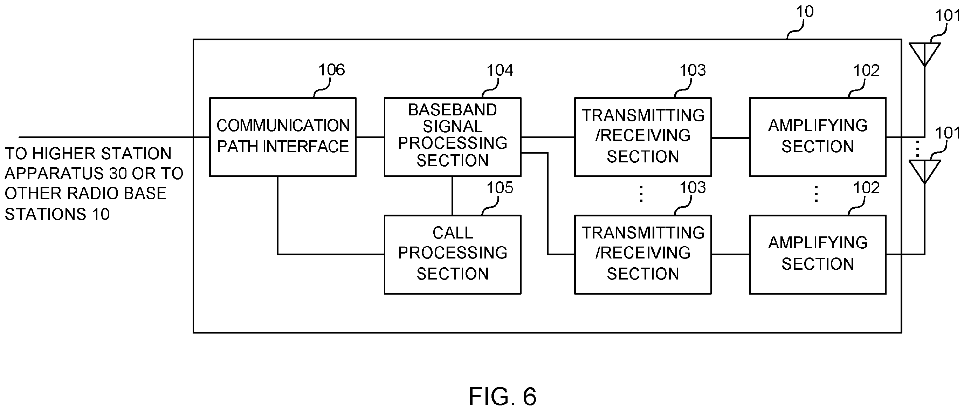

Fig. 6 is a diagram illustrating one example of an overall configuration of the radio base station according to the present embodiment. The radio base station 10 includes pluralities of transmission/reception antennas 101, amplifying sections 102 and transmitting/receiving sections 103, a baseband signal processing section 104, a call processing section 105 and a communication path interface 106. In this regard, the radio base station 10 only needs to be configured to include one or more of each of the transmission/reception antennas 101, the amplifying sections 102 and the transmitting/receiving sections 103.

User data transmitted from the radio base station 10 to the user terminal 20 on downlink is input from the higher station apparatus 30 to the baseband signal processing section 104 via the communication path interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101. The transmitting/receiving sections 103 can be composed of transmitters/receivers, transmission/reception circuits or transmission/reception apparatuses described based on a common knowledge in a technical field according to the present disclosure. In this regard, the transmitting/receiving sections 103 may be composed as an integrated transmitting/receiving section or may be composed of transmitting sections and receiving sections.

Meanwhile, each amplifying section 102 amplifies a radio frequency signal received by each transmission/reception antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the communication path interface 106. The call processing section 105 performs call processing (such as configuration and release) of a communication channel, state management of the radio base station 10, and radio resource management.

The communication path interface 106 transmits and receives signals to and from the higher station apparatus 30 via a given interface. Furthermore, the communication path interface 106 may transmit and receive (backhaul signaling) signals to and from the another radio base station 10 via an inter-base station interface (e.g., optical fibers compliant with the Common Public Radio Interface (CPRI) or the X2 interface).

In addition, each transmitting/receiving section 103 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 101 can be composed of an array antenna, for example. Furthermore, each transmitting/receiving section 103 is configured to be able to apply single BF and multiple BF.

Each transmitting/receiving section 103 may transmit a signal by using a transmission beam, or may receive a signal by using a reception beam. Each transmitting/receiving section 103 may transmit and/or receive a signal by using a given beam determined by a control section 301.

Furthermore, each transmitting/receiving section 103 may receive a Beam Failure Recovery request (e.g., BFR request), or may transmit a response (e.g., BFR request response) to the beam failure recovery request.

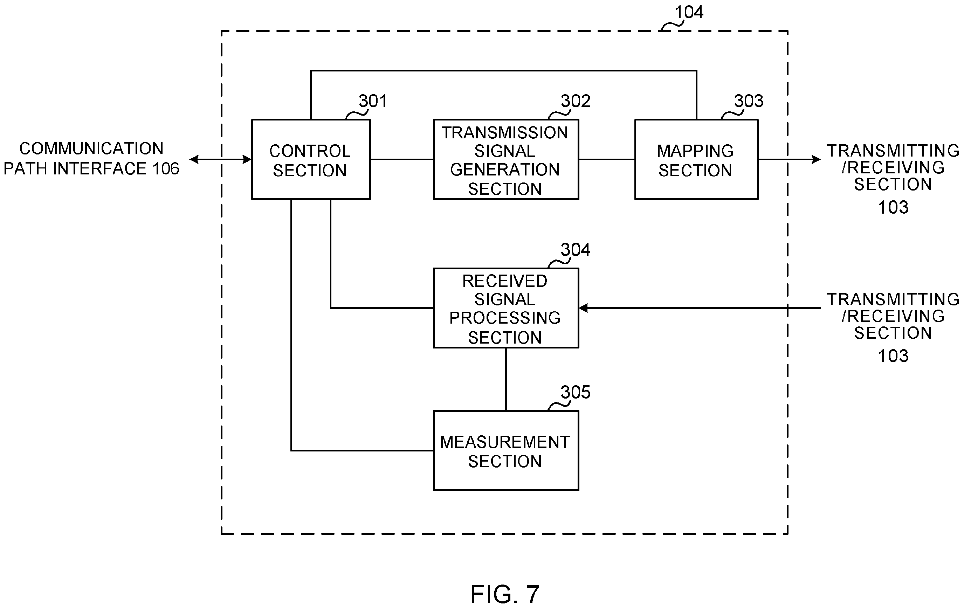

Fig. 7 is a diagram illustrating one example of a function configuration of the radio base station according to the present embodiment. In addition, this example mainly illustrates function blocks of characteristic portions according to the present embodiment, and may assume that the radio base station 10 includes other function blocks, too, that are necessary for radio communication.

The baseband signal processing section 104 includes at least the control section (scheduler) 301, a transmission signal generating section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generating section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

The control section 301 controls scheduling of synchronization signals (e.g., a PSS/SSS) and downlink reference signals (e.g., a CRS, a CSI-RS and a DMRS).

The control section 301 may perform control to form the transmission beam and/or the reception beam by using digital BF (e.g., precoding) of the baseband signal processing section 104, and/or analog BF (e.g., phase rotation) of each transmitting/receiving section 103.

Furthermore, the control section 301 may control BFR in response to the BFR request.

The transmission signal generating section 302 generates a downlink signal (such as a downlink control signal, a downlink data signal or a downlink reference signal) based on an instruction from the control section 301, and outputs the downlink signal to the mapping section 303. The transmission signal generating section 302 can be composed of a signal generator, a signal generating circuit or a signal generating apparatus described based on the common knowledge in the technical field according to the present disclosure.

The transmission signal generating section 302 generates, for example, a DL assignment that indicates downlink data allocation information, and/or a UL grant that indicates uplink data allocation information based on the instruction from the control section 301. The DL assignment and the UL grant are both DCI, and conform to a DCI format. Furthermore, the transmission signal generating section 302 performs encoding processing and modulation processing on a downlink data signal according to a code rate and a modulation scheme determined based on Channel State Information (CSI) from each user terminal 20.

The mapping section 303 maps the downlink signal generated by the transmission signal generating section 302, on given radio resources based on the instruction from the control section 301, and outputs the downlink signal to each transmitting/receiving section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### <User Terminal>

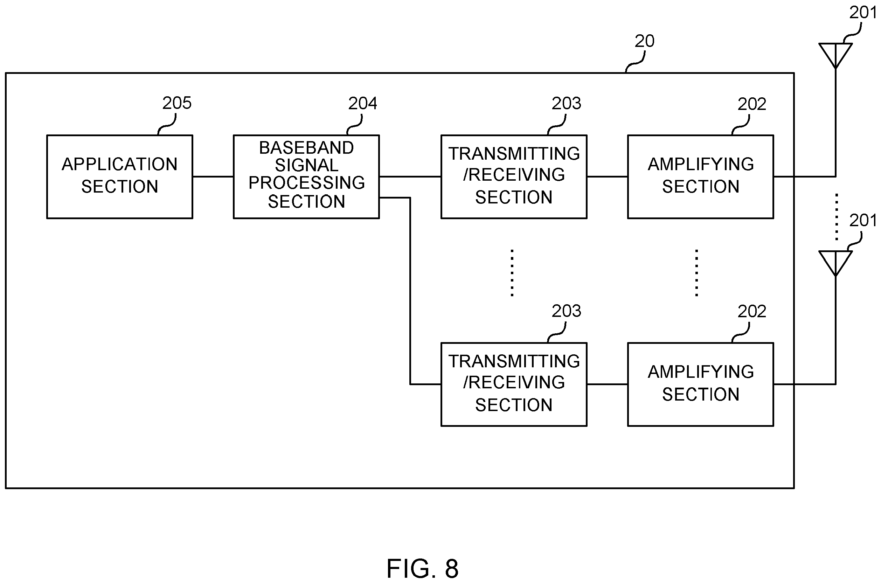

Fig. 8 is a diagram illustrating one example of an overall configuration of the user terminal according to the present embodiment. The user terminal 20 includes pluralities of transmission/reception antennas 201, amplifying sections 202 and transmitting/receiving sections 203, a baseband signal processing section 204 and an application section 205. In this regard, the user terminal 20 only needs to be configured to include one or more of each of the transmission/reception antennas 201, the amplifying sections 202 and the transmitting/receiving sections 203.

Each amplifying section 202 amplifies a radio frequency signal received at each transmission/reception antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can be composed of transmitters/receivers, transmission/reception circuits or transmission/reception apparatuses described based on the common knowledge in the technical field according to the present disclosure. In this regard, the transmitting/receiving sections 203 may be composed as an integrated transmitting/receiving section or may be composed of transmitting sections and receiving sections.

The baseband signal processing section 204 performs FFT processing, error correcting decoding, and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

In addition, each transmitting/receiving section 203 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 201 can be composed of an array antenna, for example. Furthermore, each transmitting/receiving section 203 is configured to be able to apply single BF and multiple BF.

Each transmitting/receiving section 203 may transmit a signal by using a transmission beam, or may receive a signal by using a reception beam. Each transmitting/receiving section 203 may transmit and/or receive a signal by using a given beam determined by a control section 401.

Furthermore, when detecting a beam failure, each transmitting/receiving section 203 may transmit a Beam Failure Recovery request (e.g., BFR request), or may receive a response (e.g., BFR request response) to the beam failure recovery request.

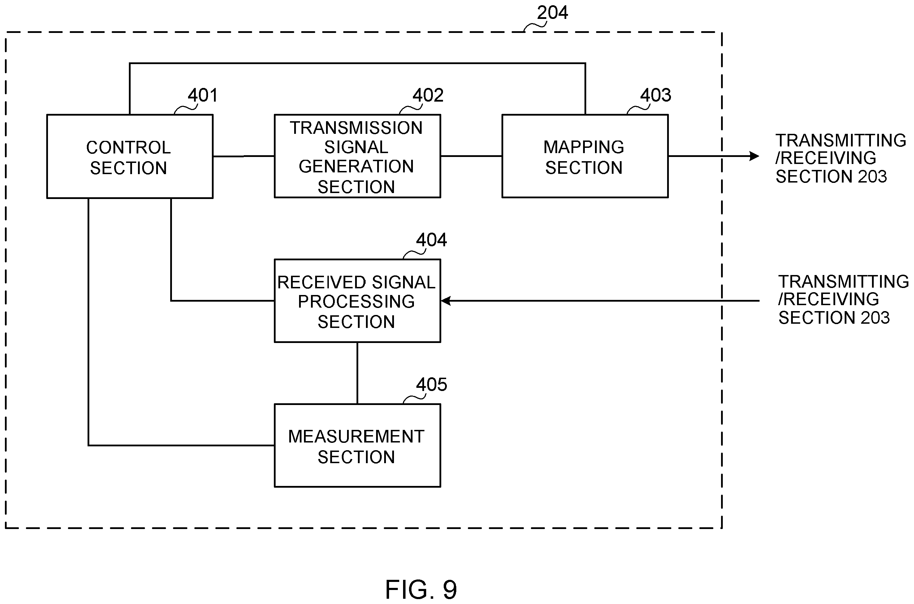

Fig. 9 is a diagram illustrating one example of a function configuration of the user terminal according to the present embodiment. In addition, this example mainly illustrates function blocks of characteristic portions according to the present embodiment, and may assume that the user terminal 20 includes other function blocks, too, that are necessary for radio communication.

The baseband signal processing section 204 of the user terminal 20 includes at least the control section 401, a transmission signal generating section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generating section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

The control section 401 may perform control to form the transmission beam and/or the reception beam by using digital BF (e.g., precoding) of the baseband signal processing section 204, and/or analog BF (e.g., phase rotation) of each transmitting/receiving section 203.

Furthermore, the control section 401 may control determination of at least one of a frequency resource (e.g., serving cell c2) used to transmit the beam failure recovery request, and a frequency resource (e.g., a serving cell c3 or CORESET-BFR) used to receive the response.

Furthermore, at least one of a first serving cell (e.g., serving cell c1) in which a beam failure has been detected, a second serving cell (e.g., serving cell c2) used to transmit the beam failure recovery request, and a third serving cell (e.g., serving cell c3) used to receive the response may be different from the rest of the cells (the first aspect and options 1-2 and 2-2).

Furthermore, the control section 401 may control transmission of the beam failure recovery request by using a radio resource (e.g., the serving cell c2 or a BFR request resource) associated with the first serving cell (the first aspect and the option 1-2).

Furthermore, the third serving cell may be associated with at least one of the first serving cell and the second serving cell (the first aspect and options 2-2-2 and 2-2-3).

Furthermore, the control section 401 may control reception of the response by using a partial band (e.g., DL BWP) associated with a control resource set (e.g., CORESET-BFR) configured to receive the response (second aspect).

The transmission signal generating section 402 generates an uplink signal (such as an uplink control signal, an uplink data signal or an uplink reference signal) based on an instruction from the control section 401, and outputs the uplink signal to the mapping section 403. The transmission signal generating section 402 can be composed of a signal generator, a signal generating circuit or a signal generating apparatus described based on the common knowledge in the technical field according to the present disclosure.

The transmission signal generating section 402 generates an uplink control signal related to transmission acknowledgement information and Channel State Information (CSI) based on, for example, the instruction from the control section 401. Furthermore, the transmission signal generating section 402 generates an uplink data signal based on the instruction from the control section 401. When, for example, the downlink control signal indicated from the radio base station 10 includes a UL grant, the transmission signal generating section 402 is instructed by the control section 401 to generate an uplink data signal.

The mapping section 403 maps the uplink signal generated by the transmission signal generating section 402, on radio resources based on the instruction from the control section 401, and outputs the uplink signal to each transmitting/receiving section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the receiving section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### <Hardware Configuration>

In addition, the block diagrams used to describe the present embodiment illustrate blocks in function units. These function blocks (components) are realized by an optional combination of hardware and/or software. Furthermore, a method for realizing each function block is not limited in particular. That is, each function block may be realized by using one physically and/or logically coupled apparatus or may be realized by using a plurality of these apparatuses formed by connecting two or more physically and/or logically separate apparatuses directly and/or indirectly (by using, for example, wired connection and/or radio connection).

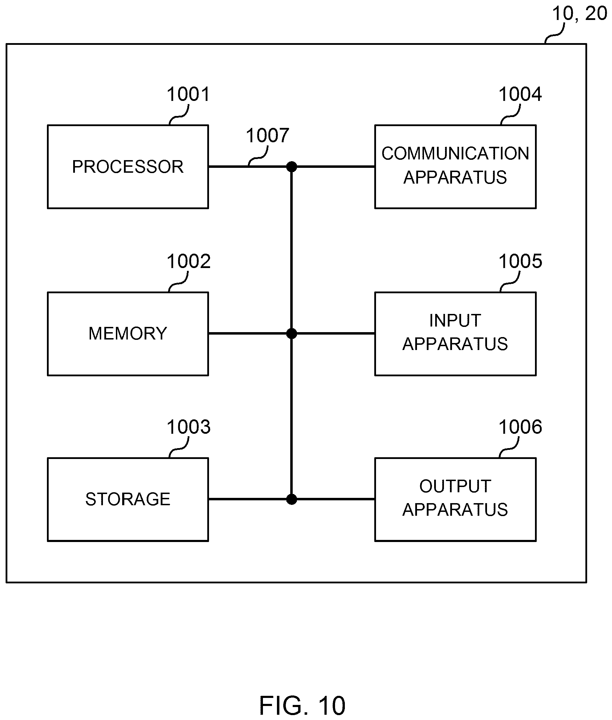

For example, the radio base station and the user terminal according to the present embodiment may function as computers that perform processing according to each aspect of the present embodiment. Fig. 10 is a diagram illustrating one example of the hardware configurations of the radio base station and the user terminal according to the present embodiment. The above-described radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 10 or may be configured without including part of the apparatuses.

For example, Fig. 10 illustrates the only one processor 1001. However, there may be a plurality of processors. Furthermore, processing may be executed by 1 processor or processing may be executed by 1 or more processors concurrently or successively or by using another method. In addition, the processor 1001 may be implemented by 1 or more chips.

Each function of the radio base station 10 and the user terminal 20 is realized by, for example, causing hardware such as the processor 1001 and the memory 1002 to read given software (program), and thereby causing the processor 1001 to perform an operation, and control communication via the communication apparatus 1004 and control reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above-described present embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the present embodiment.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via wired and/or radio networks, and will be also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above-described transmission/reception antennas 101 (201), amplifying sections 102 (202), transmitting/receiving sections 103 (203) and communication path interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or all of each function block. For example, the processor 1001 may be implemented by using at least one of these types of hardware.

### (Modified Example)

In addition, each term that has been described in this description and/or each term that is necessary to understand this description may be replaced with terms having identical or similar meanings. For example, a channel and/or a symbol may be signals (signalings). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time-domain. Each of one or a plurality of durations (frames) that composes a radio frame may be referred to as a subframe. Furthermore, the subframe may include one or a plurality of slots in the time-domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier-Frequency Division Multiple Access (SC-FDMA) symbols) in the time-domain. Furthermore, the slot may be a time unit based on the numerologies. Furthermore, the slot may include a plurality of mini slots. Each mini slot may include one or a plurality of symbols in the time-domain. Furthermore, the mini slot may be referred to as a subslot.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling for radio communication. For example, in the LTE system, the radio base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block and/or codeword, or may be a processing unit of scheduling or link adaptation. In addition, when the TTI is given, a time period (e.g., the number of symbols) in which a transport block, a code block and/or a codeword are actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe, a short subframe, a mini slot or a subslot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

Resource Blocks (RBs) are resource allocation units of the time-domain and the frequency-domain, and may include one or a plurality of contiguous subcarriers in the frequency-domain. Furthermore, the RB may include one or a plurality of symbols in the time-domain or may have the length of 1 slot, 1 mini slot, 1 subframe or 1 TTI. 1 TTI or 1 subframe may each include one or a plurality of resource blocks. In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and parameters described in this description may be expressed by using absolute values, may be expressed by using relative values with respect to given values or may be expressed by using other corresponding information. For example, a radio resource may be instructed by a given index.

Names used for parameters in this description are in no respect restrictive names. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by using a management table. The information and signals to be input and output can be overwritten, updated or additionally written. The output information and signals may be deleted. The input information and signals may be transmitted to other apparatuses.

An indication of information is not limited to the aspects/present embodiment described in this description and may be performed by using other methods. For example, the information may be indicated by a physical layer signaling (e.g., Downlink Control Information (DCI) and Uplink Control Information (UCI)), a higher layer signaling (e.g., a Radio Resource Control (RRC) signaling, broadcast information (Master Information Blocks (MIBs) and System Information Blocks (SIBs)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be indicated by using, for example, an MAC Control Element (MAC CE).

Furthermore, an indication of given information (e.g., an indication of "being X") is not limited to an explicit indication, and may be indicated implicitly (by, for example, not indicating this given information or by indicating another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSLs)) and/or radio techniques (e.g., infrared rays and microwaves), these wired techniques and/or radio techniques are included in a definition of the transmission media.

The terms "system" and "network" used in this description are compatibly used.

In this description, the terms "Base Station (BS)", "radio base station", "eNB", "gNB", "cell", "sector", "cell group", "carrier" and "component carrier" can be compatibly used. The base station will be also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can also provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used.

The mobile station will be also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/present embodiment of the present disclosure may be applied to a configuration where communication between the radio base station and the user terminal is replaced with communication between a plurality of user terminals (D2D: Device-to-Device). In this case, the user terminal 20 may be configured to include the functions of the above-described radio base station 10. Furthermore, words such as "uplink" and "downlink" may be read as a "side". For example, the uplink channel may be read as a side channel.

Similarly, the user terminal in this description may be read as the radio base station. In this case, the radio base station 10 may be configured to include the functions of the above-described user terminal 20.

In this description, operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MMEs) or Serving-Gateways (S-GWs) yet are not limited to these) other than the base stations or a combination of these.

Each aspect/present embodiment described in this description may be used alone, may be used in combination or may be switched and used when carried out. Furthermore, orders of the processing procedures, the sequences and the flowchart according to each aspect/present embodiment described in this description may be rearranged unless contradictions arise. For example, the method described in this description presents various step elements in an exemplary order and is not limited to the presented specific order.

Each aspect/present embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of the physical and logical connections. For example, "connection" may be read as "access".

It can be understood in this description that, when connected, the two elements are "connected" or "coupled" with each other by using 1 or more electric wires, cables and/or printed electrical connection, and by using electromagnetic energy having wavelengths in radio frequency domains, microwave domains and/or (both of visible and invisible) light domains in some non-restrictive and non-comprehensive examples.

A sentence that "A and B are different" in this description may mean that "A and B are different from each other". Words such as "separate" and "coupled" may be also interpreted in a similar manner.

When the words "including" and "comprising" and modifications of these words are used in this description or the claims, these words intend to be comprehensive similar to the word "having". Furthermore, the word "or" used in this description or the claims intends not to be an exclusive OR.

The present invention has been described in detail above. However, it is obvious for a person skilled in the art that the present invention is not limited to the present embodiment described in this description. The present invention can be carried out as modified and changed aspects without departing from the gist and the scope of the present invention defined based on the recitation of the claims. Accordingly, the disclosure of this description is intended for exemplary explanation, and does not bring any restrictive meaning to the present invention.

## Claims

1. A user terminal comprising:
a transmitting section that transmits a beam failure recovery request when detecting a beam failure;
a receiving section that receives a response to the beam failure recovery request; and
a control section that controls determination of at least one of a frequency resource used to transmit the beam failure recovery request, and a frequency resource used to receive the response.

2. The user terminal according to claim 1, wherein at least one of a first serving cell in which the beam failure has been detected, a second serving cell used to transmit the beam failure recovery request, and a third serving cell used to receive the response is different from a rest of the cells.

3. The user terminal according to claim 2, wherein the control section controls the transmission of the beam failure recovery request by using a radio resource associated with the first serving cell.

4. The user terminal according to claim 2 or 3, wherein the third serving cell is associated with at least one of the first serving cell and the second serving cell.

5. The user terminal according to any one of claims 1 to 4, wherein the control section controls the reception of the response by using a partial band associated with a control resource set configured to receive the response.

6. A radio communication method of a user terminal comprising:
transmitting a beam failure recovery request when detecting a beam failure;
receiving a response to the beam failure recovery request; and
controlling determination of at least one of a frequency resource used to transmit the beam failure recovery request, and a frequency resource used to receive the response.
